# EUROPEAN PATENT APPLICATION

(11) **EP 1 712 992 A1**
(43) Date of publication of application: **18.10.2006**
(21) Application number: 05007884.9
(22) Date of filing: 11.04.2005
(51) Int. Cl.: G06F 9/445

(54) **Updating of data instructions**

(71) Applicant: Sony Ericsson Mobile Communications AB, 221 88 Lund (SE)
(72) Inventor: Andersson, Stefan, 230 41 Klägerup (SE); Liwell, Marcus, 211 30 Malmö (SE); Ljung, Per, 211 58 Malmö (SE)
(74) Representative: Asketorp, Göran

(57) **Abstract**

A method and an electronic device for updating data instructions of an electronic apparatus (1) based on updating data. The method comprises acquiring updating data for updating of data instructions, meta data associated with the updating data, and at least one security mechanism associated with at least one of the updating data and the meta data. Then, it is verified by means of the security mechanism whether any of the updating data and the meta data has been unauthorizedly altered. A method and an arrangement for generating the updating data and the meta data are also disclosed.

## Description

### Technical Field of the Invention

The present invention relates to securely updating of data instructions of an electronic device based on updating data.

### Description of Related Art

Many electronic devices comprise a processor and data instructions or software for carrying out various functions. The more sophisticated device, the more data instructions. An example of such a device comprising data instructions for implementing various functions is a mobile telephone, which during the time has undergone a transformation from a simple voice-based unit to more sophisticated multimedia functions, including e.g. a voice-recognition, a media-player, a messaging application, a web browser, and an integrated camera function, all of which require data instructions.

In order to provide more sophisticated features, the complexity of the data instructions increases. At the same time, the demand on the market for new products having enhanced features increases. This presents a challenge to the manufacturers on the quality and integrity of the data instructions included in the electronic devices. As the complexity of the data instructions increases, the likelihood of defect data instructions when the device is put on the market increases.

FOTA (Firmware Over The Air) is an upgrading or updating technology for updating data instructions of electronic devices after being put on the market. When a set of data instructions is to be updated, updating data, also known as delta data or delta file, is created. The updating data contains the difference between new data instructions and the data instructions present on the electronic device. Thus, rather than sending the entire new set of data instructions to the electronic device, the updating data is sent. Then, the data instructions present on the electronic device may be updated with the content of the updating data.

The FOTA upgrade system comprises three main components:
- A delta file generation tool residing at the provider of the data instructions, which usually is the manufacturer of the electronic device which is to receive the updating data;
- A FOTA server, on which the updating data is published; and
- A client, i.e. an electronic device containing the data instructions to be updated.

The FOTA server may send an updating notification to the electronic device to trigger the updating process. Alternatively, the process is triggered manually from the electronic device containing data instructions to be updated. Then, the updating data is downloaded to the electronic device. This may be done in two steps. First, the electronic device and the server may negotiate which updating data to download. Then, the updating data may be downloaded and stored in the electronic device. Finally, the electronic device may be rebooted into a mode where only an upgrade client is running, which may upgrade the memory containing the data instructions with the content of the updating data.

One problem with FOTA updating is to provide sufficient security. It is known to provide server and client authentication. For example, the electronic device may only establish a FOTA session with a server identified in the electronic device, e.g. by appearing on a "white list". The server may e.g. be identified by its domain address.

FOTA protocol security may be implemented using TLS (Transport Layer Security), which gives confidentiality and integrity protection of the communication link between the server and the electronic device. To achieve server authentication, a CA (Certificate Authority) must have issued a server certificate to the FOTA server and the CA root certificate must be installed on the phone. Client authentication has similar requirements; a CA must have issued a client certificate to the electronic device and the CA root certificate must be installed on the FOTA server.

True client authentication requires issuing of individual client certificates to each electronic device. This is a rather expensive process.

In a scenario with a mobile terminal, the manufacturer of the mobile terminal, to which the root certificate belongs, could control the FOTA server. The server can be run in-house or be outsourced to an existing CA.

When the FOTA server is controlled by an operator, two configurations are possible:
- operators that trust the CA, which is used by the manufacturer and that accept that the server certificate is issued by the manufacturer; and
- operators that do not trust the CA used by the manufacturer and that wants to be in control of the root certificate themselves.

The first case may be more or less the same as when the manufacturer run the FOTA server itself, except that there is need to issue a server certificate to the operator controlled FOTA server.

In the second case, the root certificate is generated by the operator and therefore it must be customizable. To support client authentication in this scenario, the manufacturer must either get client certificates directly from the operator or get an intermediate CA certificate in order to be able to issue the client certificates themselves.

There are a number of disadvantages with the available security mechanisms.

Firstly, there is a lack of end-to-end security for the updating data. Once the delta file is stored on the server it is exposed for potential hacker attacks depending on the security level of the server. Thus, the provider of the delta file has to rely on the security system used at the server. If the updating data is altered, a hacker can modify the resulting data instructions in the electronic device such that it may become inoperable. Also, the updating data could be used to insert or initiate virus attacks in the electronic device.

Furthermore, it is a problem with updating data that a policy mechanism that governs the updating of the data instructions is missing. Such a mechanism may govern that certain updating data is allowed to be installed on a particular electronic device.

### Summary of the Invention

It is an object of the invention to provide increased security for updating data for updating at least a portion of data instructions stored in an electronic apparatus.

According to a first aspect a method for updating data instructions of an electronic apparatus based on updating data, comprises acquiring updating data for updating data instructions; acquiring meta data associated with the updating data; acquiring at least one security mechanism associated with at least one of the updating data and the meta data; and verifying, by means of the security mechanism, whether any of the updating data and the meta data has been unauthorizedly altered.

The method may also comprise, if it is verified any of the updating data and the meta data has not been unauthorizedly altered, the steps of: reading at least one updating criteria contained in the meta data; reading identification data stored in the electronic apparatus; and determining whether the identification data fulfills the updating criteria.

A revocation status request may be transmitted to a revocation status center. A revocation status response may be received from the revocation status center. Then, it may be determined from the revocation status response whether the security mechanism is valid.

The step of verifying may be executed in response to a request for updating the data instructions.

The updating data may be stored at a storage location, which is not accessible without authorization.

The updating data and the meta data may be acquired from a common data file. Alternatively, the updating data may be acquired from a first data file and the meta data may be acquired from a second data file. A first identifier for identifying the updating data may be acquired from the first data file, and at least a second identifier for identifying updating data, for which the meta data is applicable, may be acquired from the second data file. Then, it may be determined whether the first identifier match any identifier acquired from the second data file.

According to a second aspect, a method for generating updating data for updating data instructions of an electronic device comprises generating updating data for updating at least a portion of data instructions; generating meta data containing at least one updating criterion for the updating data; and attaching a security mechanism to at least one of the updating data and the meta data.

The method for generating updating data may comprise incorporating any of an operator ID, an electronic equipment identifier, a software version identifier, a software identifier, an electronic equipment type identifier, an electronic equipment model identifier, or a customization identifier, as the updating criterion.

The method for generating updating data may also comprise attaching revocation status data to at least one of the updating data and the meta data.

The updating data, the meta data and the security mechanism may be incorporated into a common data file. Alternatively, the updating data is incorporated into a first data file and the meta data is incorporated into a second data file. An identifier for identifying the updating data in each of the first and the second data file may also be provided.

According to a third aspect, an electronic device for updating data instructions of an electronic apparatus based on updating data comprises and updating unit configured to acquire updating data for updating data instructions; acquire meta data associated with the updating data; acquire at least one security mechanism associated with at least one of the updating data and the meta data; and verify, by means of the security mechanism, whether any of the updating data and the meta data has been unauthorizedly altered.

The electronic device may be configured to read at least one updating criteria contained in the meta data; read identification data stored in the electronic apparatus; and determine whether the identification data fulfills the updating criteria.

The electronic device may further comprise a verification unit configured to transmit a revocation status request to a revocation status center; receive a revocation status response from the revocation status center; and determine from the revocation status response whether the security mechanism is valid.

The updating unit may be configured to acquire the updating data and the meta data from a common data file. Alternatively, the updating unit may be configured to acquire the updating data from a first data file and the meta data from a second data file; acquire a first identifier for identifying the updating data from the first data file; acquire at least a second identifier for identifying updating data for which the meta data is applicable from the second data file; and determine whether the first identifier match any identifier acquired from the second data file.

According to a fourth aspect, an arrangement for generating updating data for updating data instructions of an electronic device comprises an updating data generator operative to generate updating data for updating at least a portion of data instructions; a meta data generator operative to generate meta data containing at least one updating criterion for the updating data; and a security unit operative to attach a security mechanism to at least one of the updating data and the meta data.

The meta data generator may be operative to incorporate any of an operator ID, an electronic equipment identifier, a software version identifier, a software identifier, an electronic equipment type identifier, an electronic equipment model identifier, or a customization identifier for e.g. identifying specific customization data for customizing certain functions of the mobile terminal 1, as the updating criterion.

The arrangement may be operative to incorporate the updating data, the meta data and the security mechanism into a common data file. Alternatively, the arrangement may be operative to incorporate the updating data in a first data file and the meta data in a second data file, and provide an identifier for identifying the updating data in each of the first and the second data file.

According to a fifth aspect, a computer program product comprises computer program code means for executing the method for updating data instructions of an electronic device based on updating data, when said computer program code means are run by an electronic device having computer capabilities.

According to a sixth aspect, a computer program product comprising computer program code means for executing the method for generating updating data for updating data instructions of an electronic device, when said computer program code means are run by an electronic device having computer capabilities.

Further embodiments of the invention are defined in the dependent claims.

It is an advantage of the invention that end-to-end security for updating data is provided. It is also advantageous that the updating data may be handled in a controlled way.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

Further objects, features and advantages of the invention will appear from the following detailed description of the invention, reference being made to the accompanying drawings, in which:
Fig. 1 is a schematic view of a mobile terminal connected to a network and peripheral devices;
Fig. 2 is a block diagram of one embodiment of the mobile telephone of Fig. 1;
Figs. 3-5 are block diagrams of data files;
Fig. 6 is a block-diagram of another embodiment of the mobile terminal of Fig. 1;
Fig. 7 is a block diagram of an arrangement for generating updating data and meta data;
Fig. 8 is flow-chart of a method for generating updating data and meta data; and
Fig. 9 is a flow-chart of a method for updating data instructions.

### Detailed Description of Embodiments

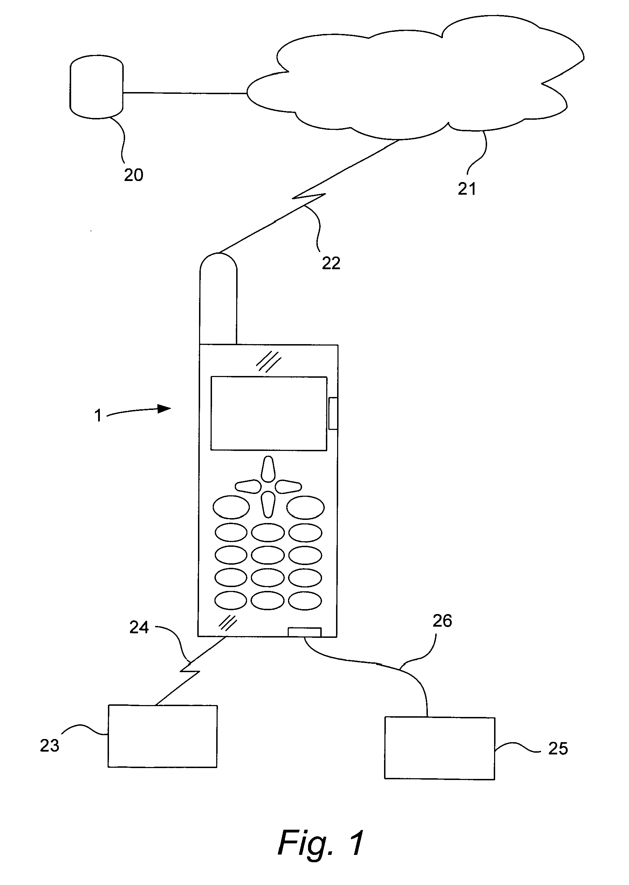

Fig. 1 illustrates an electronic device embodied as a mobile terminal 1. The invention could be implemented into any electronic device in which a need for updating data instructions exists. Examples of devices in which the invention may be implemented may e.g. include communication equipment, such as a portable or handheld mobile radio communication equipment, a mobile radio terminal, a mobile telephone, a pager, a communicator, an electronic organizer, a smartphone and a computer. The invention may also be used in consumer products, such as cameras, printers, media players, etc. comprising data instructions for implementing various features. Still another example is in electronic equipment in a vehicle.

For simplicity of presentation, reference will be made to a mobile terminal 1 in the description, which should not be interpreted restrictively, rather as an example.

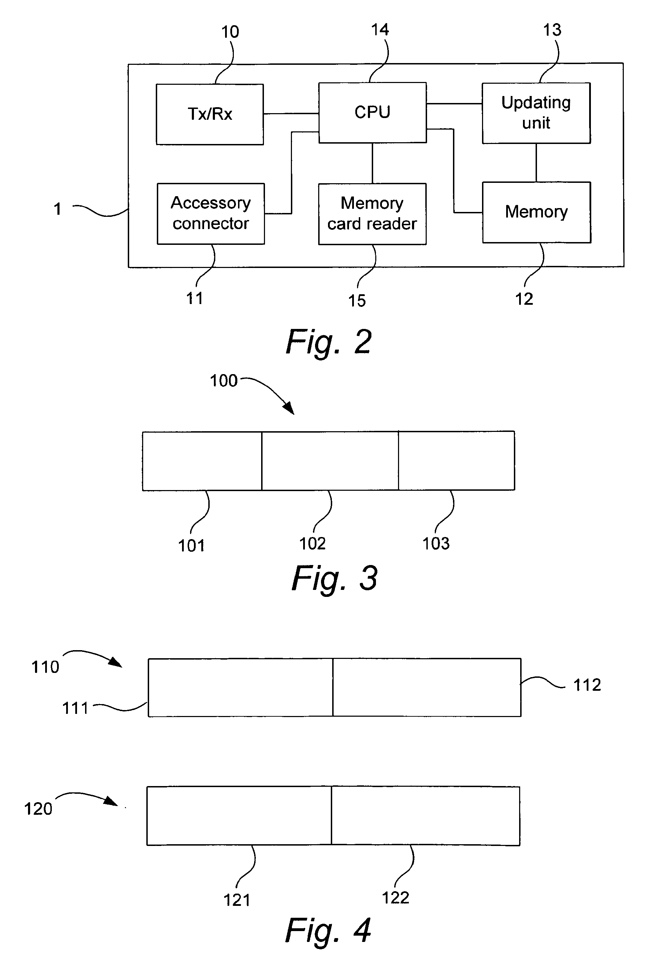

Fig. 2 illustrates certain components, which normally are integrated in the mobile terminal 1. A transmitter/receiver (Tx/Rx) unit 10 is operable for communication with external communication equipment. The Tx/Rx unit 10 may comprise a transceiver for communicating with a communication network 21 (Fig. 1), e.g. according to any communication technology such as GSM (Global System for Mobile communication), UMTS (Universal Mobile Telecommunication System), CDMA2000 (Code Division Multiple Access), PDS (Personal Digital System), or PDC (Personal Digital Cellular). The Tx/Rx unit 10 may in addition or alternatively be configured for short-range radio communication, such as Bluetooth® , WLAN (Wireless Local Area Network), or ZigBee® . Additionally or alternatively, the Tx/Rx unit 10 may comprise an IR (InfraRed) transmitter/receiver. An accessory connector 11 may be provided for enabling a wired connection to a peripheral device.

The mobile terminal 1 may comprise various types of memories, which are jointly referenced by reference numeral 12. The memory 12 may comprise a RAM (Random Access Memory), a ROM (Read Only Memory), a flash memory, a nonvolatile memory, a SIM (Subscriber Identity Module) etc. Data instructions or software for various functions of the mobile terminal 1 may be stored in the memory 12. Such functions may e.g. comprise a camera, a messaging, a file browser, a connectivity, a media player, or a phonebook function. These functions are provided for the interaction or benefit of a user. However, other functions may be invisible for the user, such as the actual setting up of a telephone call/data communication session etc.

An updating unit 13 is provided for updating the data instructions stored in the memory 12. The updating unit 13 is operable for updating the data instructions based on updating data, such as a delta file. The updating data comprises data, which may replace at least a portion of data instructions stored in the memory 12. Alternatively, the updating data may be added to the data instructions stored in the mobile terminal 1. The updating unit 13 may be implemented by hardware or software, or as a combination of hardware and software, such as a processor for running an updating client, an ASIC (Application Specific Integrated Circuit), or a FPGA (Field Programmable Gate array). The updating unit 13 is configured to acquire the updating data, to address a certain portion of the memory 12 comprising the data instructions to be updated, and to update at least the data instructions based on the acquired updating data. If necessary, the updating unit 13 may also issue an updating report for acknowledging whether the updating was successful. The updating report may e.g. be sent to the manufacturer of the mobile telephone 1.

The mobile terminal may also comprise a CPU (central Processing Unit) 14, for controlling the operability of the mobile terminal 1. For example, the CPU may implement the updating unit 13.

Furthermore, the mobile terminal 1 may comprise a memory card reader, into which a memory card may be inserted.

Fig. 1 illustrates the mobile terminal 1 connected to various devices. The updating data may be acquired in various ways. For example, the updating data may be downloaded from a remote server 20 via a communication network 21 over a wireless 22 or wired connection (not shown), such as Internet. Alternatively, the updating data is acquired from a peripheral device, such as a computer, e.g. at a service center. The mobile terminal 1 may be connected to peripheral devices 23 and 24, via a short-range wireless link 24, such as a radio link or an IR link, and/or via a wired connection 26, such as serial cable. The updating data may also be acquired from a portable memory, such as a floppy disc, a USB (Universal Serial Bus) memory, a memory card, or a CD/DVD disc. The updating data may also be preinstalled in memory 12, from which it could be acquired.

Fig. 3 illustrates components of a data file 100 containing the updating data. The updating data may be contained in a first data field 101 of data file 100. A second field 102 may contain meta data, which is associated with the updating data. A third field 103 may comprise a security mechanism. The security mechanism may comprise a signature and a certificate chain for providing integrity protection and origin authentication for the updating data and the meta data.

The meta data may contain a policy mechanism, which may describe which electronic devices are allowed to install a given updating data, or for which electronic devices the updating data contained in data file 100 is intended. The policy mechanism may comprise one or several updating criteria associated with the updating data, such as a revision identifier, which identifies the data instructions and/or version of data instructions for which the updating data is intended. The updating criteria may also comprise an equipment and/or equipment model/version identifier. The equipment identifier may identify a specific electronic equipment for which the updating data is intended. The equipment identifier may e.g. be provided by an IMEI (International Mobile Equipment Identifier), an IMSI (International Mobile Station Identifier), or any other hardware unique identifier, which is unique for each mobile terminal 1. The equipment model/version identifier may identify a certain version or model of a specific electronic equipment, for which the updating data is intended. The model/version identifier may e.g. be provided by a value, such as an integer or a string. The updating criteria may also comprise an operator ID for identifying the operator, which is serving the mobile terminal 1. For example, a specific operator may require dedicated data instructions, which is specific for that operator, to be stored in the mobile terminal 1. Alternatively or additionally, the updating criteria may comprise an electronic equipment identifier to identify a specific electronic equipment, such as an IMEI (International Mobile Equipment Identifier), a software version identifier to identify a specific version of a software, a software identifier to identify a specific software, an electronic equipment type identifier to identify a specific type of an electronic equipment, an electronic equipment model identifier to identify an specific model of an specific electronic equipment, or a customization identifier.

The signature of the security mechanism may be based on e.g. an RSA (Rivest Shamir Adleman) signature with SHA-1 (Secure Hash Algorithm 1) mechanism. The signature may be based on PKCS#1 (Public Key Cryptography Standard) or XML-dsig (extended Markup Language digital signature) or any other kind of signature method. Using an RSA signature with an SHA-1 mechanism is an advantage if this configuration is also employed by other systems of the mobile terminal 1, such as systems software, e.g. MIDP (Mobile Information Device Profile) 2.0. Then, a synergy effect between the updating unit 13 and the systems software would be achieved. This synergy effect could also be achieved by other signature mechanisms, if they are employed by other functions of the mobile terminal 1.

The updating data may be signed using the private key of the manufacturer of the updating data. The meta data may in an alternative embodiment also be signed. Alternatively, the updating data and the meta data may be jointly signed, wherein a single security mechanism will be contained in data file 100.

The public key to verify the signature may be contained in a certificate chain of the security mechanism. Providing the public key with the security mechanism of data file 100 containing the updating data has the advantage that the flexibility of the system is increased compared to storing the public key in the mobile terminal 1 at the time of manufacturing. However, in another embodiment, the public key is stored in the mobile terminal 1 at the time of manufacturing. The certificate chain is used in the mobile terminal 1 to verify that the source having issued the updating data is authorized to do so.

The certificate verification process in the mobile terminal 1 may comprise date validation, i.e. to verify that the certificate has not expired. However, date validation may be omitted, for example if the correctness of the time and/or date in the mobile terminal 1 may not be trusted.

Data file 100 will consist of both binary data (the updating data) and XML (meta data, and security mechanism). It should be possible to reference the updating data from the XML-dsig signature, if this is used to implement the security mechanism. This may be done in XML-dsig by including a URI (Uniform Resource Indientifier) in the XML-dsig pointing at the data to be signed. In this case, a special URI may be introduced, which may reference binary data residing in the same file as the XML data.

Fig. 4 illustrates an alternative embodiment for providing, and acquiring, the updating data and the meta data. A first data file 110 contains a first data field 111 and a second data field 112. Data field 111 contains updating data and an identifier for identifying the updating data. The content of data field 111 may alternatively be provided in separate data fields. Data field 112 contains a security mechanism as has been described with regard to the embodiment according to Fig. 3. Thus, integrity protection for the updating data is provided.

A second data file 120 contains a first data field 121 and a second data field 122. Data field 121 contains the meta data as has been described above, which is associated with the updating data of the first data file 110. Data field 122 contains a security mechanism as has been described above in connection to the embodiment of Fig. 3. Thus, integrity protection is provided also for the meta data. Data field 121 contains a mechanism for associating the meta data of the second file 120 with the updating data of the first file 110. The mechanism for associating may be at least one identifier, for identifying updating data that may be used together with the updating criteria contained in the meta data of the second file 121. The mechanism for associating may e.g. be a list of values, wherein each value identifies specific updating data. Thus, to apply the updating data in the first file 110, the updating unit 13 may acquire a first identifier from the first data file 110, and acquire at least a second identifier from the second data file 120. Then, the updating unit 13 may determine whether the first identifier matches any identifier acquired from the second data file 120. If the first identifier matches any identifier acquired from the second data file 120, the updating unit 13 may apply the updating data. However, if the first identifier does not match any identifier acquired from the second data file 120, the updating process may be ended. Before applying the updating data, any additional updating criteria contained in the meta data needs to be checked.

Data file 120 may be acquired together with the data file 110. Alternatively, the data files 110 and 120 may be acquired independently. Furthermore, data file 120 may be preinstalled on the mobile terminal 1 by the manufacturer.

Data file 120 may be implemented in XML. This is an advantage as several updating criteria, each containing one or several values, may be included. For example, several operator IDs or IMEI values may be incorporated into one file.

It is an advantage to provide the updating data and the meta data in separate files if they are provided or generated by different sources. It is also an advantage to provide the updating data and the meta data in separate data files, as the meta data may only be needed to be transmitted once to a specific mobile terminal but it may be necessary to transmitted the updating data at several occasions. Next time there exists a new need to update data instructions, only the updating data needs to be transmitted. Thus, the resources may be utilized more efficiently in a network in which the updating data is transmitted. Also, the power resource in the mobile terminal 1 is more efficiently utilized, as less data needs to be received.

It is also possible to include a random value generated by the mobile terminal in the data file 120 to provide replay protection, i.e. the data file may only be used once. The random value may be generated by the mobile terminal 1 and transmitted to the server 20, e.g. in a message for identifying the mobile terminal 1. The random value may also be stored in the mobile terminal. The random value may be incorporated into the message including the updating data, wherein the mobile terminal 1 may compare that the stored random value and the received random value correspond. If this is not the case, the updating data may be discarded.

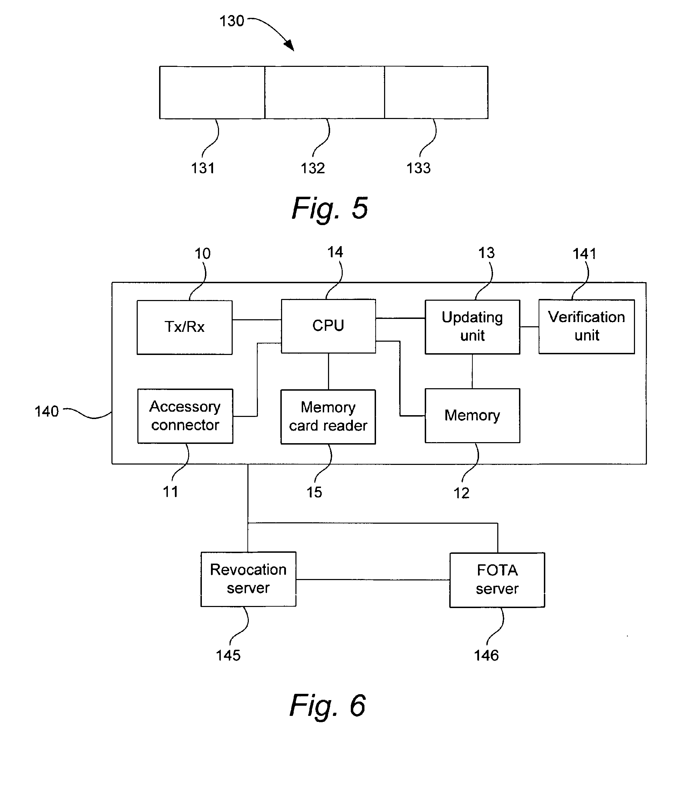

In another embodiment, revocation checking is provided for validating whether the security mechanism, e.g. the certificate or certificate chain having been used for applying the signature, has been revoked. Fig. 5 illustrates a data file 130 containing a first data field 131, a second data field 132, and a third data field 133. Data field 131 may contain updating data and/or meta data, i.e. updating and meta data contained in the same data file according to the embodiment of Fig. 3, or updating data and meta data contained in separate data files according to the embodiment of Fig. 4. Data field 132 may contain a security mechanism, for providing security protection of the content of data field 131. Data field 133 may contain revocation information. The revocation information may e.g. be a CRL or OCSP response. Alternatively or additionally, the revocation information may contain an address to a revocation server, to which a revocation request should be transmitted, and information that revocation checking should be performed before the updating data is applied.

In one embodiment, any of the data files 100, 110, 120, 130 may be encrypted to further enhance the security thereof, such as by utilizing AES (Advanced Encryption Standard) or DES (Data Encryption Standard).

Fig. 6 illustrates the mobile terminal 140 configured to provide revocation checking of the security mechanism before acquired updating data is applied. Components that are equivalent to the components of the mobile terminal 1 of Fig. 2 are denoted by the same reference numerals.

The mobile terminal 140 comprises a verification unit 141. The verification unit 141 may be provided by a processor running data instructions for implementing the verification unit, an ASIC or a FPGA. The verification unit 141 may form part of the updating unit 13. The verification unit 141 is operable to perform revocation checking. A revocation status check may be initiated in response to a request from the updating unit 13. A revocation status request may contain information for identifying the security mechanism pertaining to the request, and information for identifying the requester, to which a revocation status response should be transmitted. The revocation status response may comprise information whether the certificate pertaining to the request is valid. A revocation status request may be transmitted to a central revocation center 145, such as a server, which may keep a record of revoked security mechanisms. Alternatively or additionally, the revocation center may be a FOTA server 146 acting as a proxy, which keeps the revocation record. Thus, the revocation request could be transmitted to the FOTA server 146. The address of the revocation server may e.g. be contained in the revocation information or stored in the memory 12.

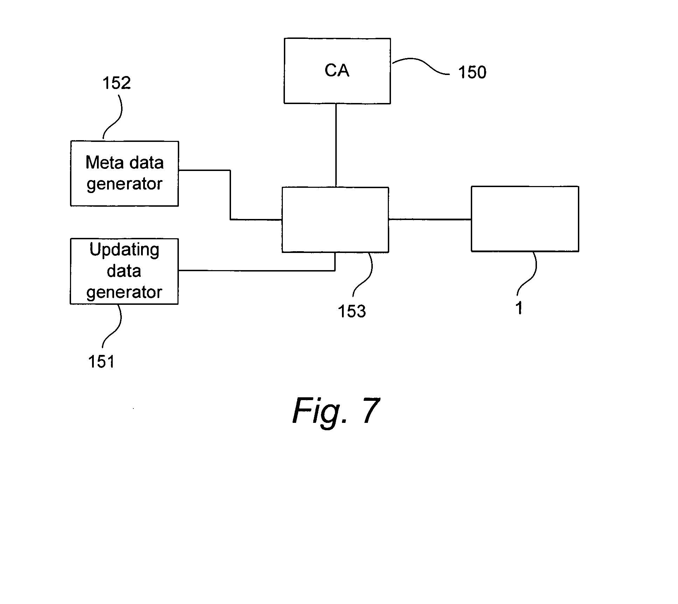

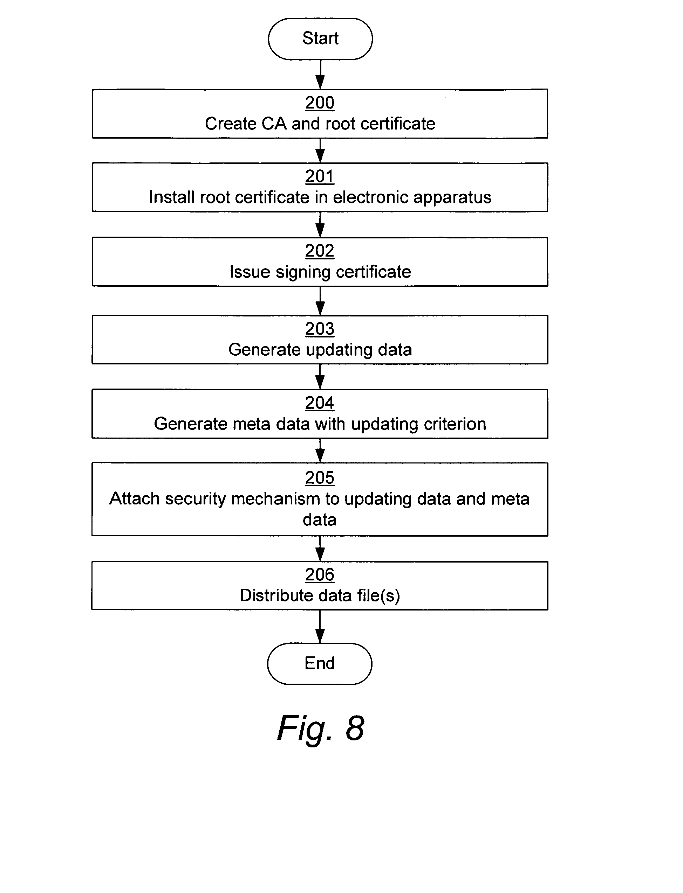

Figs. 7 and 8 illustrate an arrangement and a method for generating updating data and associated meta data. In a first step 200, a CA (Certificate Authority) 150 with a corresponding private key, public keys and a root certificate are created. Then, the root certificate is installed in the mobile terminal in step 201, e.g. at the time of manufacturing the mobile terminal or at a later stage. The root may be installed in the memory 12 at an integrity protected area. Then, a signing certificate is issued by the CA 150 in step 202 to the manufacturer of the mobile terminal 1. The apparatus for generating the data file(s) comprising the updating data and the meta data may comprise an updating data generator 151 and a meta data generator 152, which e.g. may be implemented by a processor running computer program code means. The updating data generator 151 and the meta data generator 152 generate updating data and associated meta data in steps 204 and 205, as discussed above. Furthermore, the apparatus for generating the data files containing the updating data and/or the meta data may comprise a security unit 153 operative to apply a security tool to the updating data and the meta data. The security unit may in step 206 apply the security tool by signing, using the private key and the certificate issued to the manufacturer, the updating data and the meta data. The updating data and the meta data may be contained in a single data file or in separate data files. Then, a security mechanism, which may contain the signature a certificate chain and the public key associated with the signing certificate, may be attached to the file(s) containing the updating data and/or the meta data. Finally, in step 207 the manufacturer distributes the data file containing the updating data and/or the meta data. Revocation information may also be incorporated into the data file. The data file containing the updating data and the data file containing the meta data need not be generated and distributed at the same time. Furthermore, all steps of Fig. 8 need not be carried out for generating updating data. Once a CA has been created and a certificate issued, new updating data and meta data may be generated without the need of carrying out steps 200-202.

It should be understood that the device used to issue the certificate may be physically separated from the updating data generator 151, the meta data generator 152, and the security unit 153.

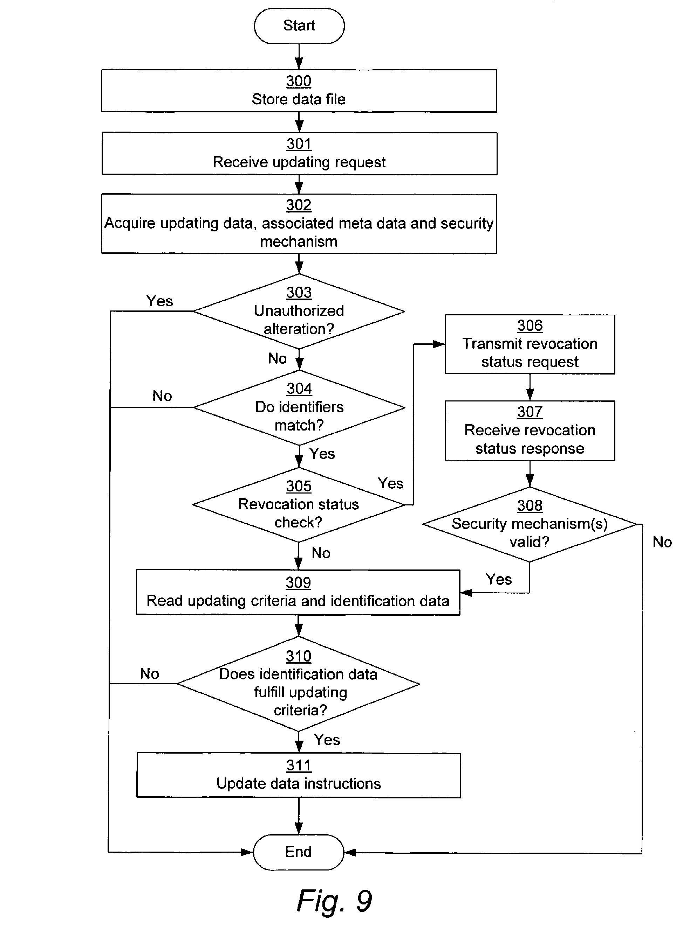

Fig. 9 illustrates one embodiment of a method for updating data instructions of an electronic apparatus based on updating data. In a first step 300, a data file containing the updating data and/or the meta data that has been acquired may be stored at a storage location that is not accessible without authorization or in any other memory area. The storage location may e.g. be a storage area of the memory 12, which is accessible by the updating unit 13. It is not necessary to store the updating data in all embodiments. For example, if an integrity check is made in connection with the updating of the data instructions, it is not necessary to store the data instructions. However, if the data file has been stored, it may be accessed in response to an updating request, which may be received by the updating unit 13 in step 301. If the integrity check is made at in connection with updating the data instructions, it is not necessary to store the updating data/meta data at a storage location, which is not accessible without authorization, rather any storage location may be used. The updating request may be initiated by a user through a man-machine interface, or another process run by the CPU 14.

In step 302, the updating data, the meta data (if required) and at least one security mechanism associated with the updating data and the meta data are acquired. The number of security mechanisms is dependent on whether the updating data and the meta data were acquired from a single data file or from separate data files. The updating data and the meta data may also need to be decrypted. If so, the updating data and/or the meta data may be decrypted in step 302 before any further processing is made.

In step 303, the updating unit 13 verifies whether the updating data or the meta data, i.e. at least one of them, has been unauthorizedly altered or tampered with. If any of the updating data or the meta data has been unauthorizedly altered, the procedure is ended. However, in another embodiment, it may be a prerequisite that both the updating data and the meta data need to be unauthorizedly altered to end the process. If the answer in step 303 is yes, the procedure is ended. If the answer in step 303 is no, i.e. the updating data and/or the meta data has not been unauthorizedly altered, the procedure proceeds to step 304.

If the updating data and the meta data are acquired from different data files, a first identifier for identifying the updating data may be acquired from the data file containing the updating data, and at least a second identifier for identifying updating data for which the meta data is applicable may be acquired from a second data file containing the meta data. The first and the second identifier may be compared in step 304 by the updating unit 13 to determine whether they match each other. If they match, the procedure proceeds to step 305. Otherwise the procedure is ended.

In step 305, it is determined whether a revocation status check should be performed. If the answer in step 305 is yes, the procedure proceeds to step 306, wherein a revocation status request is transmitted by the verification unit 141 to the revocation server 145 or the FOTA server 146. In step 307, a revocation response is received by the updating unit 13, which contains information whether the security mechanism(s) associated with the updating data and the meta data is/are valid. If it is determined in step 308 that the security mechanism, or any of the security mechanisms, is/are invalid, the procedure ends. If it is determined that the security mechanism(s) is/are valid, the procedure proceeds to step 308. In step 309, any updating criterion contained in the meta data is read by the updating unit 13. Also, identification data stored in the memory 12, to be compared with the updating criterion, is read by the updating unit 13. Then, in step 310, the updating criterion and the identification data are compared to see if they match. If one or several updating criteria do not match, the procedure may be ended. However, any scheme for applying the updating criteria may be applied. If the identification data fulfills the updating criterion, the procedure proceeds to step 311, wherein the data instructions stored in the memory 12 is updated based on the updating data. Then, the procedure may be ended. However, in one embodiment an updating acknowledge report with information of the success of the updating may be transmitted, e.g. to an updating administrator, such as the manufacturer of the mobile terminal.

All steps illustrated in Fig. 9 need not be carried out in the illustrated order. For example, in another embodiment, steps 9 and 10 are carried out after step 303. In still an alternative embodiment, step 305-308 are carried out after step 302. Still other alternatives are possible.

To achieve true end-to-end protection, i.e. protection until the updating data actually is used, the updating data may be stored at an area of the memory 12 that can not be unauthorizedly modified by data loader software or any other tool. If it is stored in a flash memory, the normal flash loader should have access to the data file containing the updating data.

Alternatively, to further enhance the security, the data file containing the updating data may be integrity protected when it is stored before being used for updating any data instructions. This can be implemented by calculating a cryptographic checksum when the data file is acquired. The checksum and the data file may then be stored in the memory 12, such as in a flash memory. When the phone is restarted, the updating unit 13 may check the integrity of the data file containing the updating data before updating the data instructions.

The updating unit 13 may be integrity protected using a reprogramming protection scheme. This scheme may perform origin authentication and integrity control, e.g. when the mobile terminal 1 is reflashed. It is also possible to make an integrity check of the updating unit 13, and possibly other units involved in the updating, such as the verification unit 141, at startup of the mobile terminal 1. This could be done e.g. as disclosed above by calculating and verifying a checksum.

Furthermore, true end-to end security would be achieved if the security mechanism contained in the data file comprising the updating data is verified at the time of updating the data instructions.

The present invention has been described above with reference to specific embodiments. However, other embodiments than the above described are equally possible within the scope of the invention. Different method steps than those described above, performing the method by hardware or software, may be provided within the scope of the invention. The different features and steps of the invention may be combined in other combinations than those described. The scope of the invention is only limited by the appended patent claims.

## Claims

1. A method for updating data instructions of an electronic apparatus (1) based on updating data, comprising:
acquiring updating data for updating data instructions;
acquiring meta data associated with the updating data;
acquiring at least one security mechanism associated with at least one of the updating data and the meta data; and
verifying, by means of the security mechanism, whether any of the updating data and the meta data has been unauthorizedly altered.

2. The method according to claim 1, further comprising, if it is verified any of the updating data and the meta data has not been unauthorizedly altered, the steps of:
reading at least one updating criteria contained in the meta data;
reading identification data stored in the electronic apparatus (1); and
determining whether the identification data fulfills the updating criteria.

3. The method according to claim 1 or 2, further comprising:
transmitting a revocation status request to a revocation status center (145, 146);
receiving a revocation status response from the revocation status center; and
determining from the revocation status response whether the security mechanism is valid.

4. The method according to any of the previous claims, comprising:
executing the step of verifying in response to a request for updating the data instructions.

5. The method according to any of the previous claims, comprising:
storing the updating data at a storage location (12), which is not accessible without authorization.

6. The method according to any of the previous claims, comprising:
acquiring the updating data and the meta data from a common data file (100).

7. The method according to any of the claims 1 to 5, comprising:
acquiring the updating data from a first data file (110) and the meta data from a second data file (120);
acquiring a first identifier for identifying the updating data from the first data file;
acquiring at least a second identifier for identifying updating data for which the meta data is applicable from the second data file; and
determining whether the first identifier match any identifier acquired from the second data file.

8. A method for generating updating data for updating data instructions of an electronic device, comprising:
generating updating data for updating at least a portion of data instructions;
generating meta data containing at least one updating criterion for the updating data; and
attaching a security mechanism to at least one of the updating data and the meta data.

9. The method according to claim 8, comprising incorporating any of an operator ID, an electronic equipment identifier, a software version identifier, a software identifier, an electronic equipment type identifier, an electronic equipment model identifier, or a customization identifier, as the updating criterion.

10. The method according to claim 8 or 9, comprising attaching revocation status data to at least one of the updating data and the meta data.

11. The method according to any of claims 8 to 10, comprising incorporating the updating data, the meta data and the security mechanism into a common data file (100).

12. The method according to any of claims 8 to 11, comprising incorporating the updating data in a first data file (110) and the meta data in a second data file (120), and provide an identifier for identifying the updating data in each of the first and the second data file.

13. An electronic device for updating data instructions of an electronic apparatus (1) based on updating data, comprising and updating unit (13) configured to:
acquire updating data for updating data instructions;
acquire meta data associated with the updating data;
acquire at least one security mechanism associated with at least one of the updating data and the meta data; and
verify, by means of the security mechanism, whether any of the updating data and the meta data has been unauthorizedly altered.

14. The electronic device according to claim 13, wherein the updating unit (13) is further configured to:
read at least one updating criteria contained in the meta data;
read identification data stored in the electronic apparatus (1); and
determine whether the identification data fulfills the updating criteria.

15. The electronic device according to claim 13 or 14, further comprising a verification unit (141) configured to:
transmit a revocation status request to a revocation status center (145, 146);
receive a revocation status response from the revocation status center; and
determine from the revocation status response whether the security mechanism is valid.

16. The electronic device according to any of claims 13 to 15, wherein the updating unit (13) is configured to:
acquire the updating data and the meta data from a common data file (100).

17. The electronic device according to any of claims 13 to 15, wherein the updating unit (13) is configured to:
acquire the updating data from a first data file (110) and the meta data from a second data file (120);
acquire a first identifier for identifying the updating data from the first data file;
acquire at least a second identifier for identifying updating data for which the meta data is applicable from the second data file; and
determine whether the first identifier match any identifier acquired from the second data file.

18. An arrangement for generating updating data for updating data instructions of an electronic device (1), comprising:
an updating data generator (151) operative to generate updating data for updating at least a portion of data instructions;
a meta data generator operative to generate meta data containing at least one updating criterion for the updating data; and
a security unit (153) operative to attach a security mechanism to at least one of the updating data and the meta data.

19. The arrangement according to claim 18, wherein the meta data generator (152) is operative to incorporate any of an operator ID, an electronic equipment identifier, a software version identifier, a software identifier, an electronic equipment type identifier, an electronic equipment model identifier, or a customization identifier, as the updating criterion.

20. The arrangement according to any of claims 18 or 19, wherein the arrangement is operative to incorporate the updating data, the meta data and the security mechanism into a common data file (100).

21. The arrangement according to any of claims 18 to 19, wherein the arrangement is operative to incorporate the updating data in a first data file (110) and the meta data in a second data file (120), and provide an identifier for identifying the updating data in each of the first and the second data file.

22. A computer program product comprising computer program code means for executing the method according to any of claims 1 to 7, when said computer program code means are run by an electronic device having computer capabilities.

23. A computer program product comprising computer program code means for executing the method according to any of claims 8 to 12, when said computer program code means are run by an electronic device having computer capabilities.
